# EUROPEAN PATENT APPLICATION

(11) **EP 2 665 006 A1**
(43) Date of publication of application: **20.11.2013**
(21) Application number: 11855124.1
(22) Date of filing: 29.12.2011
(51) Int. Cl.: G06F 17/40, G06F 17/21

(54) **METHOD FOR SUPPORT IN SUCH A WAY AS TO ALLOW COLLECTION OF OBJECTS COMPRISED IN AN INPUT IMAGE, AND A RECORDING MEDIUM ABLE TO BE READ BY TERMINAL DEVICES AND COMPUTERS**

(30) Priority: 04.01.2011 KR 20110000650
(71) Applicant: Olaworks, Inc., Seoul 135-919 (KR)
(72) Inventor: RYU, Jung Hee, Seoul 134-772 (KR); RYU, Ha Na, Suwon-si Gyeonggi-do 440-210 (KR)
(74) Representative: Goddar, Heinz J.
(86) International application number: PCT/KR2011/010346
(87) International publication number: WO 2012/093811

(57) **Abstract**

According to the present invention, a method is provided which comprises the steps of: (a) inputting an image comprising a predetermined object and then calculating the degree of similarity with a reference object image by means of image matching, and recognising the nature of the object by using object recognition technology for recognising objects via a reference object image identifier where the degree of similarity corresponds to more than a threshold degree of similarity, text recognition technology for recognising text, numbers and symbols comprised in the object, and barcode recognition technology for recognising a barcode comprised in the object; (b) acquiring a collection page comprising information about a grammatically constituted autocomment and information about the recognised object by using the recognition information about the nature of the object, the location where the input image was generated or the time when the input image was generated; and (c) storing the collection page when a recording request is received.

## Description

### Technical Field

The present invention is related to a method, a terminal, and a computer-readable recording medium for supporting collection of an object included in an image inputted via a terminal and more specifically to the method, the terminal, and the computer-readable recording medium, wherein at least one of the object recognition technology, optical character recognition (OCR) technology, and barcode recognition technology is used to recognize the identity of the object included in the inputted image, at least one among the recognition information on the identity of the object, the recognition information on the place where the image was created, and the recognition information on the time when the image was created is used to obtain a collection page including a sentence combined to comply with the grammar of an applicable language, or in other words, the information on an auto-comment and the information on the image of the recognized object, and the collection page is to be stored when a request for registering the collection page is received so that a user may collect information on the object of interest rapidly and conveniently and be provided with various services related to the above without the inconvenience of editing various information on numerous objects around the user one by one.

**Background Technology**

Recently, due to the widespread use of the Internet, it has been common to provide information converted to a digital form which was once offered in the form of printing such as books. As the information converted into digital data may be shared and delivered in real time by many users thanks to the spread of the Internet and 3G network or other highspeed communications systems, it is widely used compared to printed materials which relatively lacks information sharing and delivery.

In particular, a technology of providing several information forms in a method for augmented reality (AR) which displays supplementary information, including computer graphics (CG), texts, etc., combined on an inputted image taken in real time by a user's terminal has been recently introduced. According to the AR technology, the technology may provide a better environment for the user because it may offer various icons including required information which may overlap with each other visually on the screen in which the real world that the user watches is displayed.
When several information sources are provided and shared by using the AR, it is actually difficult to determine the information on all objects included on an image photographed or inputted by a user's terminal and effectively store the information. Even if the user wants to store only the information on the objects with relatively high interest (or high importance) differentially, it is complicated and vexing to systematically record and store the information.
Therefore, it is true that it has a certain degree of limits in order to draw out more active participation from the users.

### Detailed Description of the Invention

### Technical Tasks

It is the objective of the present invention to solve all of the problems described above.

It is another objective of the present invention to acquire information on the auto-comment about the object of interest and the image corresponding to the object by using information including the identity, location and time of the object included in an inputted image to configure a collection page and to allow the collection page to be systematically stored at the request for registration thereof so that a user may easily store various information on numerous objects around the user.

It is still another objective of the present invention to enable to encourage the user's desire for participation based on the information collected on a certain object by providing the information on a mission that may be performed with respect to the applicable object and the information on a reward provided when the mission is performed.

### Means of Task Resolution

The representative configuration of the present invention intended to achieve the above objectives is described below:

In accordance with one aspect of the present invention, a method for supporting the collection of an object included in an inputted image through a terminal is provided comprising, (a) a step in which, upon inputting an image comprising a certain object on the screen of the terminal, at least one from among the object recognition technology which is used to compute degrees of similarity by matching the inputted image which includes the object with already stored reference object images and to recognize the identity of the object by referring to an identifier of a specific reference object image exceeding the preset threshold degree of similarity, the optical character recognition technology for recognizing the identity of the object by recognizing at least one from among a character, a number, and a symbol included in the object, and the barcode recognition technology for recognizing the identity of the object from a barcode included in the object is used to recognize the identity of the object, (b) a step in which the recognition information on the identity of the object, the recognition information on the place where the inputted image was created, and the recognition information on the time when the inputted image was created is used to acquire a collection page including the information on an auto-comment containing a phrase or sentence correctly combined under the grammar of an applicable language and the information on the image with respect to the recognized object; and (c) a step in which, upon receiving a request for registering the collection page, the collection page is to be stored per each user.

In accordance with another aspect of the present invention, a terminal for supporting collection of an object included in an inputted image through a terminal is provided comprising an object recognition part that, upon inputting an image comprising a certain object on the screen of the terminal, uses at least one of the object recognition technology which is used to compute degrees of similarity by matching the inputted image which includes the object with already stored reference object images and to recognize the identity of the object by referring to an identifier of a specific reference object image exceeding the preset threshold degree of similarity to recognize the identity of the object; the optical character recognition technology for recognizing the identity of the object by recognizing at least one from among a character, a number, and a symbol included in the object, and the barcode recognition technology for recognizing the identity of the object from a barcode included in the object is used to recognize the identity of the object; and a collection performing part that uses at least one from among the recognition information on the identity of the object, the recognition information on the place where the inputted image was created, and the recognition information on the time when the inputted image was created to acquire a collection page including the information on an auto-comment containing a phrase or sentence correctly combined under the grammar of an applicable language and the information on the image with respect to the recognized object, and, upon receiving a request for registering the collection page, allows the collection page of a user to be stored.

In addition, the other method and system for implementing the present invention and other computer-readable recording medium for recording a computer program to run the method are further provided.

### Effects of the Invention

According to the present invention, the information including the identity, location, and place on an object included in the inputted image is used to acquire an auto-comment about the object of interest and information on the image, and, upon requesting for registration thereof, an auto-comment about the object of interest and information on the image are to be systematically stored so that a user may conveniently and quickly store various information on numerous objects around the user without the inconvenience of editing them one by one and manage them.

In addition, according to the present invention, the information on the mission that may be performed in relation to an applicable object and the information on the reward provided upon performing a mission are provided to a user so that the user may be guided to perform collection on an object more actively.

### Brief Description of the Invention

Figure 1 is a diagram that schematically represents the configuration of a terminal (100) to support collection of an object included in an inputted image according to one embodiment example of the present invention.

Figure 2 is a diagram that represents an illustration in which an applicable object is recognized if a certain object is inputted as an inputted image according to one embodiment example of the present invention.

Figure 3 is a diagram that represents an illustration of a collection page including the information on an auto-comment and the information on the recognized object in accordance with an embodiment example of the present invention.

Figure 4 is a diagram representing an illustration in which the collection page of an object is stored according to one embodiment example of the present invention.

Figure 5 is a diagram that illustrates unique virtual space assigned to allow each user to manage his or her own collection page according to one embodiment example of the present invention.

<Description of Reference Numerals>

100: terminal

110: input image acquisition part

120: object recognition part

130: collection performing part

140: quest managing part

150: communication part

160: control part

300: collection page

310: recognition information identity of object

320: auto-comment

330: image about recognized object

### Embodiments of the Invention

In the following detailed description of the present invention, references are made to the accompanying drawings that show specific embodiment examples as illustrations in which the present invention may be practiced. These embodiment examples are described in sufficient detail to enable those skilled in the art to practice the invention. It is to be understood that the various embodiment examples of the invention, although different, are not necessarily mutually exclusive. For example, a particular feature, structure, or characteristic described herein in connection with one embodiment example may be implemented within other embodiment examples without departing from the spirit and scope of the invention. In addition, it is to be understood that the location or arrangement of individual elements within each disclosed embodiment example may be modified without departing from the spirit and scope of the invention. Therefore, the following detailed description is not to be taken in a limiting sense, and the scope of the present invention is defined only by the accompanying claims, if they are appropriately interpreted, along with a full range of equivalents which the claims claim. In the drawings, similar numerals refer to the same or similar functionality throughout several aspects.

The following describes the present invention in detail by referring to the preferred embodiment examples of the present invention so that those having common knowledge of the technical field to which the present invention belongs may easily practice the present invention.

[Preferred Embodiment Examples of the Invention]

In the specification, a collection may be defined to indicate a series of processes of collecting and storing an auto-comment made by using at least one from the information on the identity of an object which contains its type, property, etc. included in an image and the information on the place and time of photographing the image including the applicable object and an image corresponding to the applicable object as data.
For example, if a movie poster is included in an inputted image, a series of processes of recognizing an applicable poster as the target object of the collection and collecting and storing the information on a combined sentence correct under the grammar of a language from the information on the movie corresponding to the poster (including its synopsis, director, and lead actor and actress information) and the information on the place and time at which the image including the poster was photographed as data are applicable to the collection for the movie poster.

Configuration of the Whole System

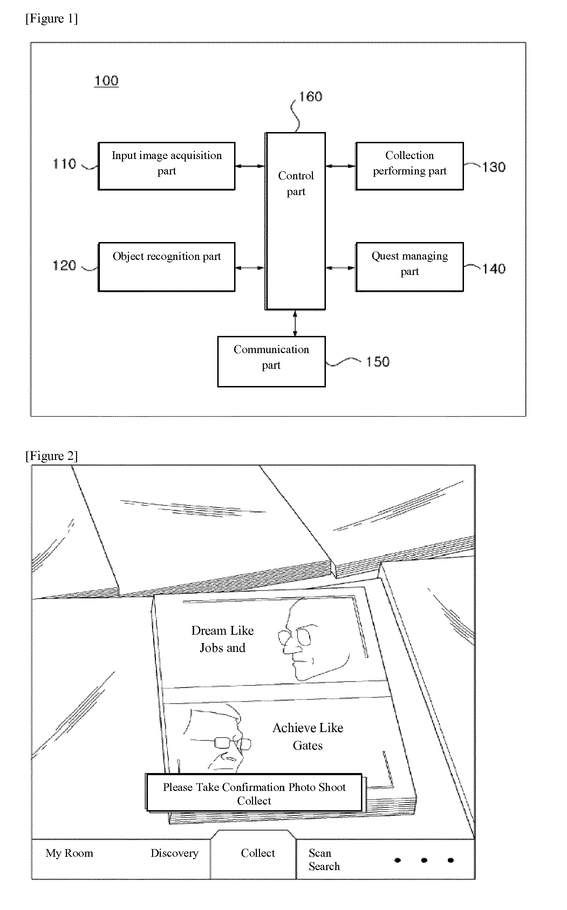

Figure 1 is a diagram that schematically presents the configuration of a terminal (100) to support collection of an object included in an inputted image according to one embodiment example of the present invention.

As illustrated in Figure 1, the terminal (100) in accordance with an embodiment example of the present invention may include an input image acquisition part (110), an object recognition part (120), a collection performing part (130), a quest managing part (140), a communication part (150) and a control part (160). In accordance with an example of the present invention, at least some of the input image acquisition part (110), the object recognition part (120), the collection performing part (130), the quest managing part (140), the communication part (150) and the control part (160) may be program modules communicating with the terminal (100). Such program modules may be included in a terminal (100) in the form of an operating system, an application program, and other program modules, and physically stored in a number of well-known storage devices. In addition, such program modules may also be stored in a remote storage device capable of communicating with the terminal (100). On the other hand, such program modules include but are not limited to a routine, a subroutine, a program, an object, a component, and a data structure for executing a specific operation or a type of specific abstract data that will be described later according to the present invention.

First, according to one embodiment example of the present invention, the input image acquisition part (110) may perform the function of acquiring an inputted image that is a basis of object recognition implemented by the object recognition part (120) described later. More specifically, the input image acquisition part (110) in accordance with an embodiment example of the present invention may include a variety of image photographing devices such as a CCD camera and perform the function of receiving a landscape scene around a user who carries the terminal (100) in real time, for example, in a preview state.

Next, if the inputted image containing a certain object is acquired by the input image acquisition part (110), the object recognition part (120) in accordance with an embodiment example of the present invention may perform a function of recognizing the identity of a certain object by using at least one from the object recognition technology which is used to compute degrees of similarity by matching the inputted image with object images already stored in a certain database (hereinafter referred to as "the reference object image") and to recognize the identity of the object through an identifier of a specific reference object image exceeding the preset threshold degree of similarity, the optical character recognition (OCR) technology to recognize the identity of the object by perceiving at least one from among a character, number or symbol included in the photographed object, and the barcode recognition technology used to recognize the identity of the object from the barcode included in the photographed object and the like.

As a certain object recognition technology used to recognize a certain object included in the inputted image from different angles and at a distance, the article titled "A Comparison of Affine Region Detectors" authored jointly by K. MIKOLAJCZYK and seven other authors and published in the "International Journal of Computer Vision" in November 2005 may be referred to (the whole content of the article must be considered to have been combined in the specification). The article describes a method for detecting affine invariant regions to accurately recognize the same object photographed from different angles. Of course, object recognition technologies applicable to the present invention are not limited only to the method mentioned in the article, and the present invention may be implemented by applying its various modification examples. To use the object recognition technology for recognizing the identity of the object by computing degrees of similarity through image matching, the object recognition part (120) may be interlocked with a certain database (not illustrated) in which the reference object image and the corresponding identifier are recorded.

Moreover, certain optical character recognition (OCR) technology for recognizing certain character strings included in the inputted image may refer to the specification of Korea Patent Application No. 2006-0078850, and the specification must be considered in its entirety to have been combined herein. The specification mentions a method for creating each candidate character forming a character string included in the inputted image and performing the character recognition technology to each created candidate character. The optical character recognition technology which is applicable to the present invention is not limited to the method described in the specification but various modified examples may be considered.

In addition, the technology for recognizing a barcode included in the inputted image may refer to the specification of Korea Patent Registration No. 0791704, and the specification must be considered in its entirety to have been combined herein. In the specification, a method for extracting a barcode field is described by analyzing the adjacency relationship of the connection fields on the basis of the characteristics of the structure of a barcode, determining a unit width which is to be used as a module width of the barcode in accordance with the width of the connection field of the black pixel in the extracted barcode field and collating the barcode pattern with the input width pattern to recognize the barcode. The optical character recognition technology which is applicable to the present invention is not limited to the method described in the specification but various modified examples may be considered.

Figure 2 is a diagram that represents an illustration in which an applicable object is recognized if a certain object is inputted as an inputted image according to one embodiment example of the present invention.

In reference to Figure 2, when a book titled "Dream Like Jobs and Achieve Like Gates" is included in an image inputted into the terminal (100), the object recognition part (120) will be able to recognize the object included in the inputted image as a book "Dream Like Jobs and Achieve Like Gates" by applying the object recognition technology, the optical character recognition technology and/or the barcode recognition technology to the inputted image.

Next, according to an embodiment example of the present invention, the collection performing part (130) may perform a function to acquire a collection page including the information on a properly assembled phrase or sentence (so-called "an auto-comment") under the grammar of a language by using at least one from the information on the identity of the object acquired by the object recognition part (120), the place where the inputted image was created and the time where the inputted image was created and the information on the image of the recognized object, and allow the collection page to be stored when a request for registration of the page is received.

Specifically, the collection performing part (130) according to one embodiment example of the present invention will be able to compute the present location of the terminal (100) by using a location positioning technology such as GPS technology, A-GPS technology, WPS technology and cell-based location based service (LBS) to thereby complete the auto-comment to be included in the collection page by using the recognition information on the place where the inputted image was created. For this, the collection performing part (130) may include a specific GPS module, a mobile telecommunication module, etc.

Furthermore, the collection performing part (130) in accordance with an embodiment example of the present invention may acquire the image of the object to be recognized and included in the collection page directly from the inputted image or indirectly from a specific reference object image which exceeds the preset threshold degree of similarity through the process of image matching with the object included in the inputted image. The image of the recognized object included in the collection page may be preferably in a thumbnail form.

On the other hand, the collection performing part (130) according to one embodiment example of the present invention may allow the collection page of a user to be stored so that it may be managed according to the user of the terminal (100), and in such a case, the collection performing part (130) may also assign a unique virtual space per user which each user supports so as to manage his or her own collection page.

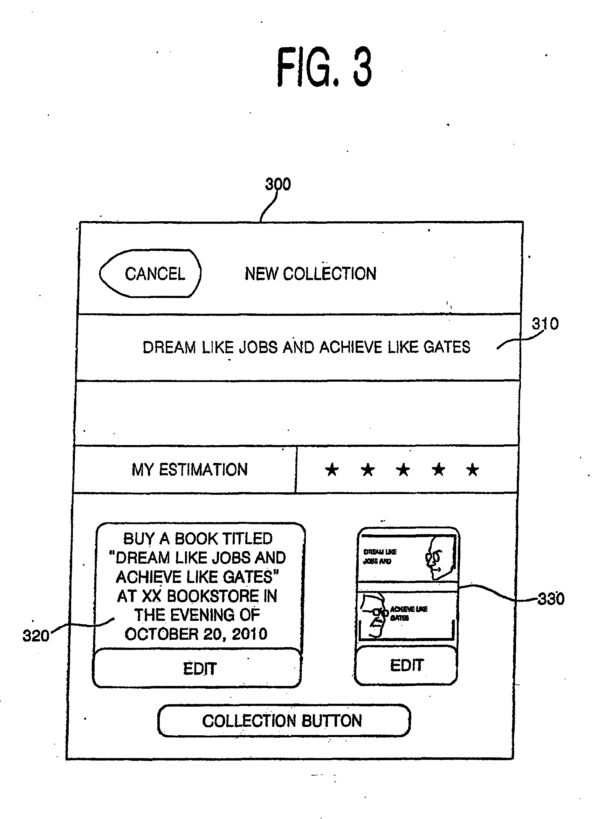

Figure 3 is a diagram that represents an illustration of a collection page including the information on an auto-comment and the information on the recognized object in accordance with an embodiment example of the present invention.

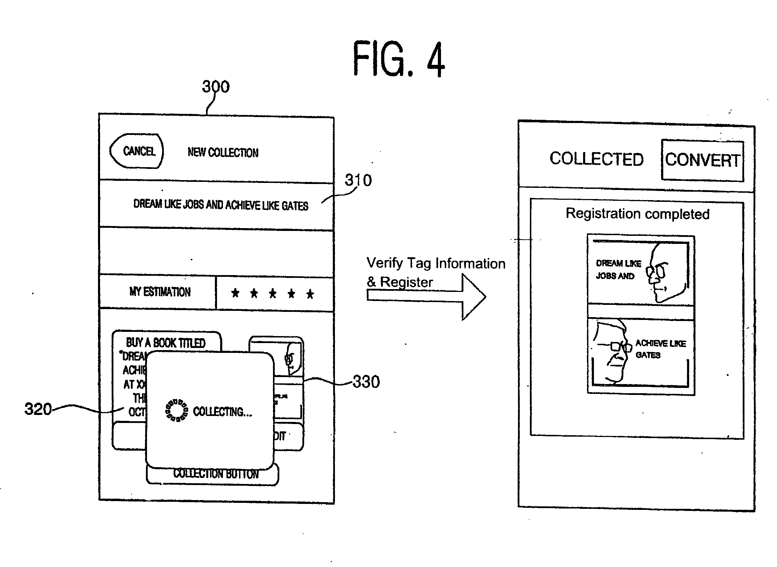

By referring to Figure 3, it can be verified that the collection performing part (130) acquired the collection page (300) including the auto-comment (320) properly assembled under Korean grammar by using the recognition information on the identity of the book (310) obtained by the object recognition part (120) and the recognition information on the place where the inputted image was created ("XX Bookstore") and the time when the inputted image was created ("Oct. 20, 2010") and the image of the recognized book (330). Figure 3 illustratively shows a case in which the image of the recognized book (330) is displayed as an image in the form of a thumbnail indirectly acquired from the reference object image instead of the one directly acquired from an inputted image (in other words, the inputted image of Figure 2). Even though the collection page (300) in Figure 3 illustrates that the auto-comment (320) and the image of the recognized book (330) are directly displayed but an embodiment example of the present invention is not limited to this and simply storing the information on the auto-comment or the information on an identifier of the recognized book may be considered instead of displaying the auto-comment (320) and the image of the recognized book (330) directly as described above.
Thereafter, the collection performing part (130) may be confirmed to make the user's collection page (300) stored when the request for the registration of the collection page (300) is received (see Figure 4).

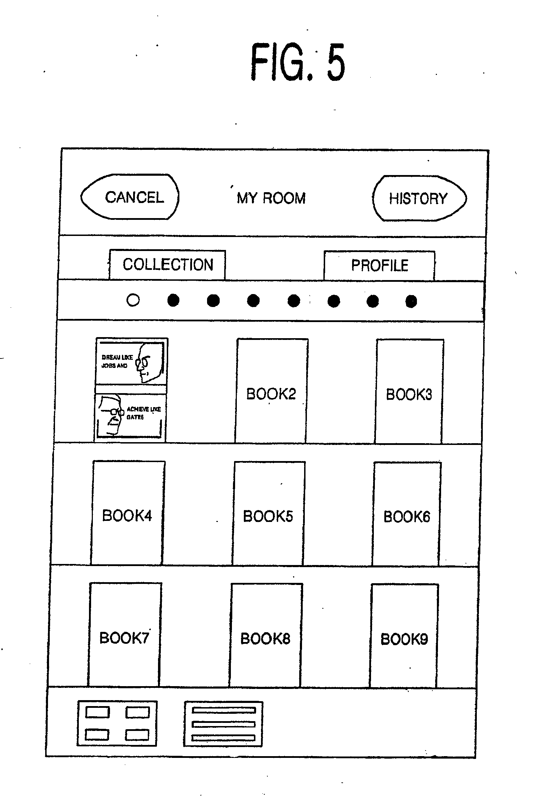

Figure 5 is a diagram that illustrates unique virtual space assigned to allow each user to manage his or her own collection page according to one embodiment example of the present invention.

By referring to Figure 5, it may be verified that the collection performing part (130) assigns the user's unique virtual space called "MY ROOM" in storing the collection page of a user so that the user may manage his or her own collection page.

Next, according to one embodiment example of the present invention, when a specific object is collected for the number of times exceeding the preset threshold value, the quest managing part (140) may perform a function to provide the user with mission information that the user may perform with respect to the object and reward information offered when the mission was performed. More specifically, the mission information may be the information about how many times the user must additionally collect the object and the reward information may correspond to the information provided if the user performs the mission, or for example, the information on the coupon issued by a company which services or sells the object. For example, if the user visited and collected a place (an object) called "an aquarium in the Building 63" three times, such case may be considered in which the quest managing part (140) provides the mission information and reward information of "When the aquarium in the Building 63 is collected two more times, a 50% discount coupon on an admission ticket of the aquarium in the Building 63 will be issued" for the user.

According to an embodiment example of the present invention, the communication part (150) may perform a function to allow the terminal (100) of the present invention to communicate with an external device.

Lastly, according to an embodiment example of the present invention, the control part (160) performs a function to control the flow of the data among the input image acquisition part (110), the object recognition part (120), the collection performing part (130), the quest managing part (140) and the communication part (150). In other words, the control part (160) controls to perform each unique function in the input image acquisition part (110), the object recognition part (120), the collection performing part (130), the quest managing part (140) and the communication part (150) by controlling the flow of data from outside or the flow of data among the components of the terminal (100).

The embodiment examples described above according to the present invention can be implemented in the form of a program command that may be executed through a variety of computer components and recorded on a computer-readable recording media. The computer-readable media may include solely or in combination the program commands, data files and data structures. The program commands recorded on the computer-readable recording medium may be specially designed and configured for the present invention or may be known to and usable by a person skilled in the field of computer software. Examples of the computer-readable recording medium include magnetic media such as hard disk, floppy disk, and magnetic tape, optical media such as CD-ROM and DVD, magneto-optical media such as floptical disk and hardware devices such as ROM, RAM and flash memory especially configured to store and execute program commands.
Program commands include not only a machine language code made by a compiler but also a high level code that can be used by an interpreter etc., which is executed by a computer. The hardware device may be configured to work as one or more software modules to perform the action according to the present invention, and its reverse is also the same.

While the present invention has been described so far with certain details such as specific components and limited embodiment examples and drawings, they were merely provided to promote an overall understanding of the present invention, and the present invention is not limited by the embodiment examples above. A person with common knowledge of the field to which the present invention belongs may attempt various modifications and changes based on such descriptions.

Therefore, the ideas of the present invention must not be confined to the embodiment examples explained, and the Scope of Claims to be described later as well as everything including the variations equal or equivalent to the Scope of Claims would belong to the category of the ideas of the present invention.

## Claims

1. A method for supporting collection of an object included in an inputted image through a terminal is provided comprising:
(a) a step in which, upon inputting an image comprising a certain object on the screen of the terminal, at least one from among the object recognition technology which is used to compute degrees of similarity by matching the inputted image which includes the object with already stored reference object images and to recognize the identity of the object by referring to an identifier of a specific reference object image exceeding the preset threshold degree of similarity, the optical character recognition technology for recognizing the identity of the object by recognizing at least one from a character, a number, and a symbol included in the object, and the barcode recognition technology for recognizing the identity of the object from a barcode included in the object is used to recognize the identity of the object,
(b) a step in which at least one from among the recognition information on the identity of the object, the recognition information on the place where the inputted image was created, and the recognition information on the time when the inputted image was created is used to acquire a collection page including the information on an auto-comment containing a phrase or sentence correctly combined under the grammar of an applicable language and the information on the image with respect to the recognized object,
(c) a step in which upon receiving a request for registering the collection page, the collection page is to be stored per user, and
(d) a step in which if the object is collected by the user by the number exceeding the preset threshold times, such information is provided to the user so that a reward is provided to the user if the user performs a designated act with respect to the object.

2. The method recited in Claim 1, wherein in the step (d), performing the designated act with respect to the object includes achieving the number of collections of the object that is additionally requested to the user.

3. The method recited in Claim 1, wherein the information of providing the reward includes the information on a coupon issued by a company which services or sells the object.

4. The method recited in Claim 1, wherein in the step (b),
the image of the object is acquired directly from the inputted image or indirectly acquired from a reference object image which was acquired through image matching between the object included in the inputted image and the reference object image and corresponds to the preset threshold degree of similarity or higher.

5. The method recited in Claim 4, wherein the image of the object is acquired in the form of a thumbnail.

6. The method recited in Claim 1, wherein the collection page is stored so that it may be managed per user of the terminal.

7. The method recited in Claim 6, wherein, in step (c), virtual space is assigned so that the collection page may be managed according to the user.

8. A terminal for supporting collection of an object included in an inputted image through a terminal comprising:
an object recognition part that, upon inputting an image comprising a certain object on the screen of the terminal, uses at least one of the object recognition technology which is used to compute degrees of similarity by matching the inputted image which includes the object with already stored reference object images and to recognize the identity of the object by referring to an identifier of a specific reference object image exceeding the preset threshold degree of similarity to recognize the identity of the object, the optical character recognition technology for recognizing the identity of the object by recognizing at least one from among a character, a number, and a symbol included in the object, and the barcode recognition technology for recognizing the identity of the object from a barcode included in the object is used to recognize the identity of the object,
a collection performing part that uses at least one from the recognition information on the identity of the object, the recognition information on the place where the inputted image was created, and the recognition information on the time when the inputted image was created to acquire a collection page including the information on an auto-comment containing a phrase or sentence correctly combined under the grammar of an applicable language and the information on the image with respect to the recognized object, and upon receiving a request for registering the collection page, allows the collection page of a user to be stored, and
a quest managing part that, if the object is collected by the user by the number exceeding the present threshold times, provides such information that a reward is provided to the user if the user performs a designated act with respect to the object.

9. The terminal recited in Claim 8, wherein if the object is collected by the user by the number exceeding the preset threshold times, it further includes a quest managing part that provides the information about a mission that may be performed with respect to the object and the information about a reward that is provided upon performing the mission to the user.

10. The terminal recited in Claim 8, wherein if the number of collections about the object additionally requested to the user is achieved, the quest managing part provides such information to the user so that a reward is provided to the user.

11. The terminal recited in Claim 8, wherein the quest managing part provides the user with the information on the reward including the information on a coupon issued by a company servicing or selling the object.

12. The terminal recited in Claim 8, wherein the collection performing part acquires the image of the object directly from the inputted image or indirectly acquires from a reference object image which was acquired through image matching between the object included in the inputted image and the reference object image and corresponds to the preset threshold degree of similarity or higher.

13. The terminal recited in Claim 12, wherein the collection performing part acquires the image of the object in the form of a thumbnail.

14. The terminal recited in Claim 8, wherein the collection page is stored so that it may be managed per user of the terminal.

15. The terminal recited in Claim 14, wherein the collection performing part assigns virtual space so that the collection page may be managed according to the user.

16. A computer-readable recording medium on which a computer program is recorded to execute the method according to any one of the claims from Claim 1 to Claim 7.
